# EUROPEAN PATENT SPECIFICATION

(11) **EP 1 144 825 B1**
(45) Date of publication and mention of the grant of the patent: **03.09.2003**
(21) Application number: 99965777.8
(22) Date of filing: 10.11.1999
(51) Int. Cl.: F02B 63/00

(54) **ENGINE WITH FLUID SUB-SYSTEMS**
MASCHINE MIT FLUIDTEILSYSTEM
MOTEUR A SOUS-SYSTEMES DE FLUIDE

(30) Priority: 21.01.1999 US 235359; 21.01.1999 US 235360; 21.01.1999 US 235358
(43) Date of publication of application: 17.10.2001
(73) Proprietor: CATERPILLAR INC., Peoria Illinois 61629-6490 (US)
(72) Inventor: BARTLEY, Bradley, E., Manito, IL 61546 (US); BLASS, James, R., Bloomington, IL 61704 (US); GIBSON, Dennis, H., Chillicothe, IL 61523 (US)
(74) Representative: Wagner, Karl H., Dipl.-Ing.
(86) International application number: US9926489
(87) International publication number: WO00043654

(56) References cited:
- DE-A- 3 519 650
- DE-A- 19 630 407
- DE-A- 19 711 682
- GB-A- 2 320 523
- US-A- 4 285 200

## Description

### Technical Field

The present invention relates generally to a vehicle with a power steering system and an internal combustion engine, and more particularly to fluid subsystems for internal combustion engines.

### Background Art

In some applications, multiple engine systems are powered by separate hydraulic pumps. For instance, engines including both a hydraulic system and a traditional fan drive system often utilize multiple engine hydraulic pumps. Likewise, in vehicles including both a hydraulic fuel system and a traditional power steering system, multiple engine hydraulic pumps are commonly utilized. Further, vehicle engines including a passenger compartment heating system often contain a separate pump and plumbing because these heating systems exchange heat with engine fluid. In an effort to make engines more reliable and to reduce part count, it is therefore desirable to more efficiently organize engine subsystems.

Additionally, engineers are always searching for ways to increase the efficiency of engines and their subsystems. For example, in the case of the previously mentioned engine including a fan drive system, altering the fan drive system to operate independent of engine speed would help avoid wasting system energy. In a similar manner, several previous passenger compartment heating systems relied upon a method of drawing heat from engine coolant fluid to provide heat to a vehicle passenger compartment. The coolant fluid flows through a heat exchanger where the heat of the fluid is transferred to the air flowing toward the passenger compartment. Once the coolant fluid passes through the heat exchanger, it is returned to the engine for recirculation. Because heat from the engine operation is responsible for heating the coolant fluid, and due to the inherent properties of coolant fluids, these systems often take a substantial amount of time to provide heat to passenger compartments after a cold start.

The prior art as exemplified by JP-A-10059199 or JP-A-5039053 uses a high pressure pump for operating both power steering and engine fan.

The present invention is directed to overcoming one or more of the problems set forth above.

### Disclosure Of The Invention

In accordance with the present invention, a vehicle is provided as set forth in claim 1. Preferred embodiments of the present invention may be gathered from the dependent claims.

### Brief Description Of The Drawings

Figure 1 is a schematic view of a power steering and hydraulically-actuated system according to one embodiment of the present invention.
Figure 2 is a diagrammatic perspective view of a portion of a vehicle having a power steering system according to the Figure 1 embodiment of the present invention.
Figure 3 is a schematic view of a hydraulically actuated system according to another embodiment of the present invention.
Figure 4 is a diagrammatic representation of the fan drive system of Figure 3.
Figure 5 is a diagrammatic view of the engine of the hydraulic system on Figure 3.
Figure 6 is a diagrammatic representation of a vehicle according to still another embodiment of the present invention.
Figure 7 is a diagrammatic view of the engine of the vehicle of Figure 6.
Figure 8 is a schematic view of a hydraulically actuated fuel injection system according to one aspect of the Figure 6 embodiment of the present invention.

### Best Mode Of Carrying Out The Invention

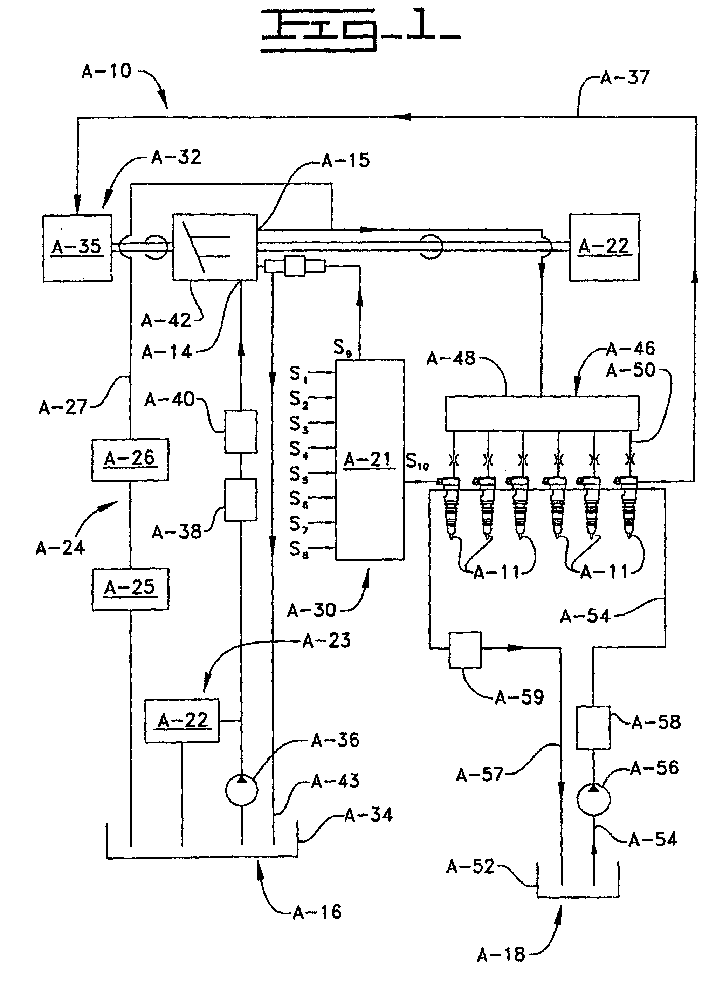

Referring to Figure 1, there is shown one embodiment of the present invention. Specifically, there is shown a schematic representation of a power steering system A-24 and a hydraulically actuated fuel injection system A-10 as adapted for a direct injection diesel cycle internal combustion engine A-22. The fuel injection system A-10 includes at least one fuel injector A-11, all of which are adapted to be positioned in a respective cylinder head bore of engine A-22. The fuel injection system A-10 includes a source of actuation fluid A-16 which supplies actuation fluid to each fuel injector A-11, as well as to an engine lubricating circuit A-23 and power steering circuit A-24. While any available engine fluid could be used as the actuation fluid in this system, the present invention preferably utilizes engine lubricating oil. This allows fuel injection system A-10 to be connected directly to engine lubricating circuit A-23. The fuel injection system A-10 also includes a source of fuel A-18 for supplying fuel to each fuel injector A-11. A means for recirculating actuation fluid A-32 containing a hydraulic motor A-35 is included in fuel injection system A-10. The means for recirculating actuation fluid A-32 is capable of recovering energy from the actuation fluid leaving each of the fuel injectors A-11. A computer A-30 is also included in fuel injection system A-10 to control timing and duration of injection events.

The source of actuation fluid A-16 preferably includes an engine oil pan A-34, an actuation fluid cooler A-38, one or more actuation fluid filters A-40 and a low pressure pump A-36 for supplying oil or actuation fluid to both engine lubricating circuit A-23 and fuel injection system A-10. The source of actuation fluid A-16 also preferably includes high pressure pump A-42 for generating high pressure in the actuation fluid and at least one high pressure manifold A-46. High pressure pump A-42 includes an inlet A-14 connected to an outlet of low pressure pump A-36, and an outlet A-15. Both power steering circuit A-24 and high pressure manifold A-46 are connected to outlet A-15. The location of power steering circuit A-24 as related to high pressure manifold A-46 is a matter of design choice. For instance, power steering circuit A-24 could be connected to high pressure manifold A-46 at a downstream location instead of in the manner shown in Figure 1.

A rail branch passage A-50 connects a high pressure actuation fluid inlet of each fuel injector A-11 to high pressure common rail A-48. Actuation fluid exiting fuel injector A-11 flows through a low pressure actuation fluid drain which is connected to the means for recirculating actuation fluid A-32 via a recirculation passage A-37. A portion of the recirculated actuation fluid is channeled to high pressure pump A-42 and another portion is returned to oil pan A-34 via a recirculation line A-43 and recirculated by low pressure pump A-36.

Actuation fluid is delivered to power steering circuit A-24 by high pressure pump A-42 via a flow passage A-27 which branches from high pressure pump A-42. Power steering circuit A-24 preferably includes a hydraulic cylinder A-25 and a power steering box A-26. Actuation fluid can flow into power steering circuit A-24 through outlet A-15 via a flow passage A-27. Actuation fluid is channeled through power steering circuit A-24 by flow passage A-27 which returns it to oil pan A-34. While a pressure reduction valve has not been shown, it should be appreciated that a pressure reduction valve would be required if it is desirable for power steering circuit A-24 to operate at a different pressure than fuel injection system A-10.

The source of fuel A-18 preferably includes a fuel supply regulating valve A-59 and a fuel circulation and return passage A-57 arranged in fluid communication between fuel injectors A-11 and fuel tank A-52. Fuel is supplied to fuel injectors A-11 via a fuel supply passage A-54 arranged in fluid communication between fuel tank A-52 and the fuel inlet of each fuel injector A-11. Fuel being supplied through fuel supply passage A-54 travels through a low pressure fuel transfer pump A-56 and one or more fuel filters A-58.

Fuel injection system A-10 is electronically controlled via computer A-30 which includes an electronic control module A-21 that controls the timing and duration of injection events and pressure in high pressure manifold A-46. Based upon a variety of input parameters including temperature, throttle, engine load, etc. (S₁ - S₈) electronic control module A-21 can determine a desired injection timing duration and manifold pressure to produce some desired performance at the sensed operating conditions. Electronic control module A-21 could also control a pressure control valve included in power steering circuit A-24, if desired.

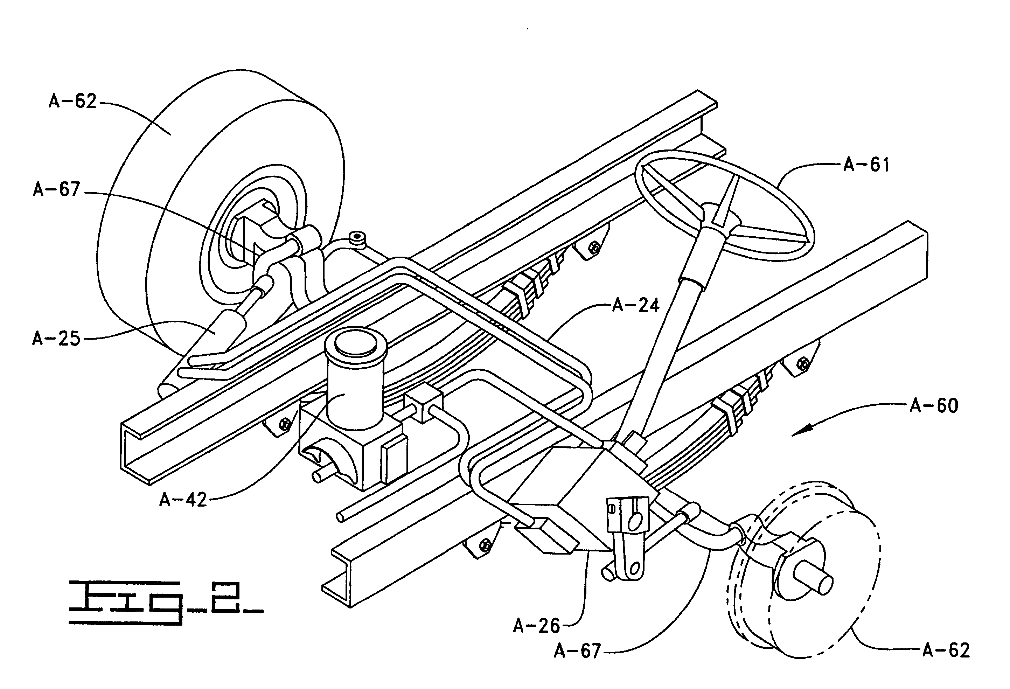

Referring now in addition to Figure 2, there is shown a portion of a vehicle housing A-69 of a vehicle A-60 according to the present invention. Power steering circuit A-24 is attached to vehicle housing A-69 and includes hydraulic cylinder A-25 and power steering box A-26. Fluid flow to hydraulic cylinder A-25 is controlled by a valve within power steering box A-26. Hydraulic cylinder A-25 is connected to at least one wheel A-62 by a linkage system A-67. Power steering box A-26 is connected to a steering wheel A-61 which is responsible for controlling vehicle A-60. Power steering circuit A-24 is powered by actuation fluid delivered by high pressure pump A-42. Recall that unlike in previous systems, high pressure pump A-42 controls both power steering circuit A-24 and fuel injection system A-10.

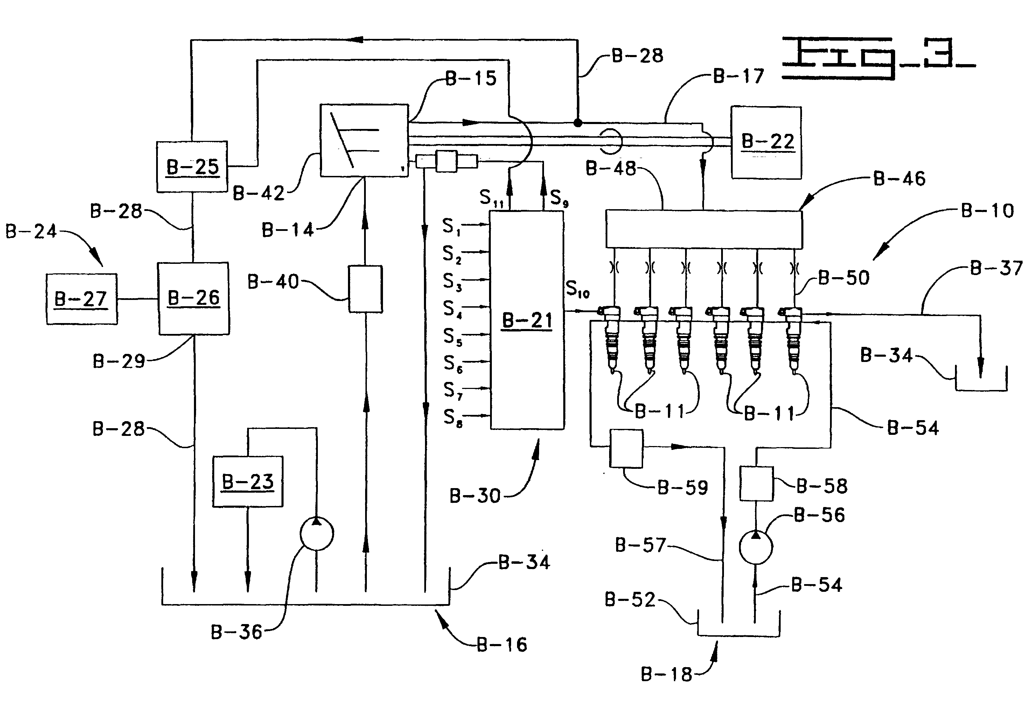

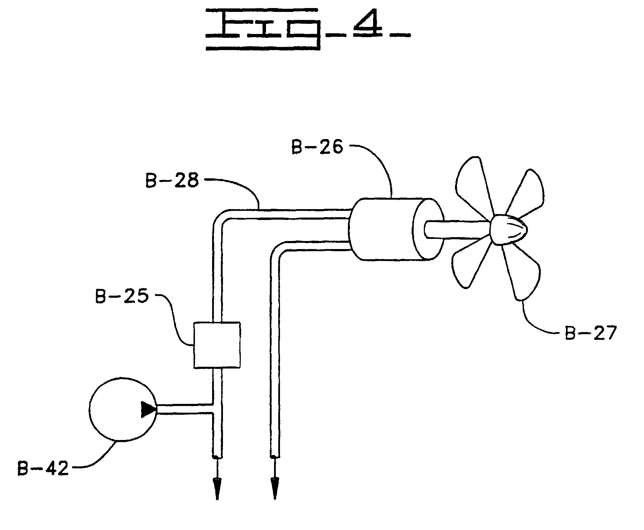

Referring now to Figures 3 and 4, there is shown another embodiment of the present invention. In particular, there is shown a schematic representation of a hydraulically actuated fuel injection system B-10 as adapted for a direct injection diesel cycle internal combustion engine B-22 and a diagrammatic representation of a fan drive system B-24. The fuel injection system B-10 includes at least one hydraulically actuated fuel injector B-11, all of which are adapted to be positioned in a respective cylinder head bore of engine B-22. The fuel injection system B-10 includes a source of actuation fluid B-16 which supplies actuation fluid to each fuel injector B-11, as well as to an engine lubricating circuit B-23 and fan drive system B-24. While any available engine fluid could be used as the actuation fluid in this system, the present invention utilizes engine lubricating oil. This allows fuel injection system B-10 to be connected directly to engine lubricating circuit B-23. The fuel injection system B-10 also includes a source of fuel B-18 for supplying fuel to each fuel injector B-11. A computer B-30 is also included in fuel injection system B-10 to control timing and duration of injection events.

The source of actuation fluid B-16 preferably includes an engine oil pan B-34, one or more actuation fluid filters B-40 and a low pressure pump B-36 for supplying oil or actuation fluid to both engine lubricating circuit B-23 and fuel injection system B-10. Also preferably included in source of actuation fluid B-16 is a high pressure pump B-42 for generating high pressure in the actuation fluid and at least one high pressure manifold B-46. High pressure pump B-42 includes an inlet B-14 fluidly connected to oil pan B-34, and an outlet B-15. Both fan drive system B-24 and a high pressure common rail B-48 are connected to outlet B-15. A rail branch passage B-50 connects a high pressure actuation fluid inlet of each fuel injector B-11 to high pressure common rail B-48. Actuation fluid exiting fuel injector B-11 flows through a low pressure actuation fluid drain via a recirculation passage B-37 to oil pan B-34.

Actuation fluid is delivered to fan drive system B-24 by high pressure pump B-42 via a flow passage B-28. Fan drive system B-24 preferably includes a fan B-27 which is controlled by a hydraulic fan motor B-26. Actuation fluid can flow into fan drive system B-24 through high pressure pump outlet B-15 via flow passage B-28. Actuation fluid flowing through flow passage B-28 into fan drive system B-24 first flows through a flow regulating valve B-25. Flow regulating valve B-25 can reduce the pressure of the actuation fluid flowing into fan drive system B-24 to account for differing pressure needs of fuel injection system B-10 and fan drive system B-24. In other words, flow regulating valve B-25 permits the speed of fan drive system B-24 to be set somewhat independent of the speed of engine B-22. One end of flow passage B-28 connects fan drive system B-24 to high pressure pump outlet B-15 while a second end connects a fan hydraulic motor outlet B-29 to oil pan B-34. Thus, actuation fluid exiting fan drive system B-24 flows through flow passage B-28 to oil pan B-34 for recirculation.

The source of fuel B-18 preferably includes a fuel supply regulating valve B-59 and a fuel circulation and return passage B-57 arranged in fluid communication between fuel injectors B-11 and a fuel tank B-52. Diesel fuel is supplied to fuel injectors B-11 via a fuel supply passage B-54 which is arranged in fluid communication between fuel tank B-52 and the fuel inlet of each fuel injector B-11. Diesel fuel being supplied through fuel supply passage B-54 travels through a low pressure fuel transfer pump B-56 and one or more fuel filters B-58.

Fuel injection system B-10 is electronically controlled via a computer B-30 which includes an electronic control module B-21 that controls the timing and duration of injection events and pressure in high pressure manifold B-46. Based upon a variety of input parameters including temperature, throttle, engine load, etc. (S₁ - S₈) electronic control module B-21 can determine a desired injection timing, duration and manifold pressure to produce some desired performance at the sensed operating conditions. Electronic control module B-21 also controls flow regulating valve B-25 to ensure that actuation fluid entering hydraulic fan motor B-26 is in accordance with the cooling needs of the engine, if any.

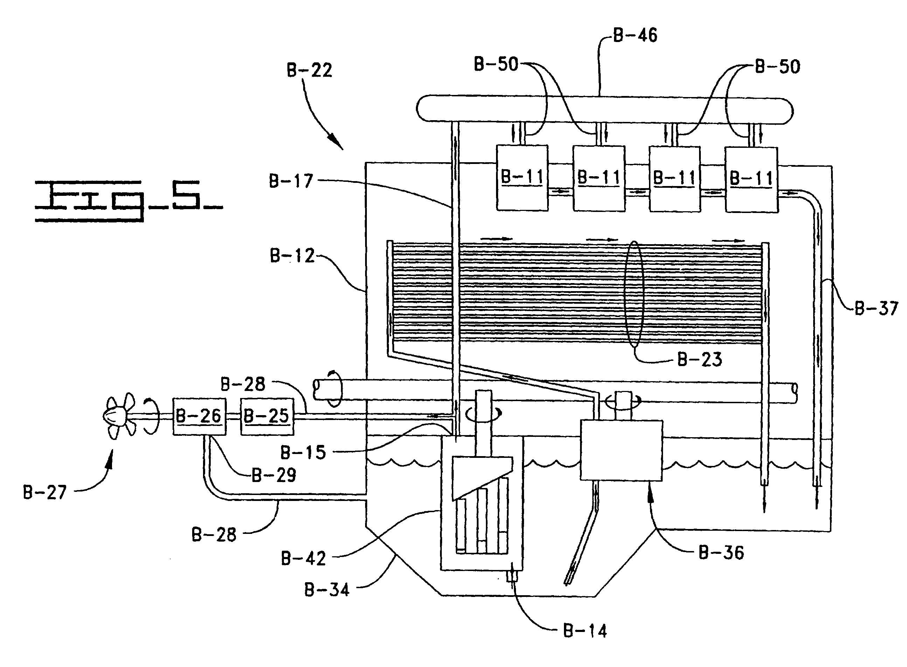

Referring now to Figure 5, engine B-22 includes an engine housing B-12. Oil pan B-34 filled with an amount of lubricating oil is contained within engine B-22 and defined in part by engine housing B-12. Lubricating circuit B-23 is contained within engine B-22, including low pressure pump B-36. Operating in parallel to lubricating circuit B-23 is fuel injection system B-10 which preferably utilizes lubricating oil as a hydraulic fluid in actuating hydraulically actuated fuel injectors B-11. Fuel injection system B-10 also includes high pressure pump B-42 which is positioned in oil pan B-34 and partially submerged in the lubricating oil. Recall that while any available engine fluid could be used by fuel injection system B-10 as actuation fluid, the present invention preferably utilizes engine lubricating oil. This allows fuel injection system B-10 to be directly connected to oil pan B-34. Pump inlet B-14 is positioned on high pressure pump B-42 to be near the bottom of oil pan B-34 in order to always be exposed to a ready supply of lubricating oil.

A first portion of pressurized oil exits high pressure pump B-42 through outlet B-15 and flows through a high pressure supply passageway B-17 to an inlet of a high pressure manifold B-46. High pressure manifold B-46 includes a plurality of outlets, each of which is connected to a respective branch passage B-50. Each branch passage B-50 is connected to an inlet of an individual fuel injector B-11. Each fuel injector B-11 includes an outlet that empties into recirculation passage B-37 which allows lubricating oil to return to oil pan B-34 for recirculation.

A second portion of pressurized oil exits high pressure pump B-42 through outlet B-15 and flows through flow regulating valve B-25 via flow passage B-28 to an inlet of hydraulic fan motor B-26. Hydraulic fan motor B-26 includes an outlet B-29 that empties into flow passage B-28 which allow lubricating oil to return to oil pan B-34 for recirculation.

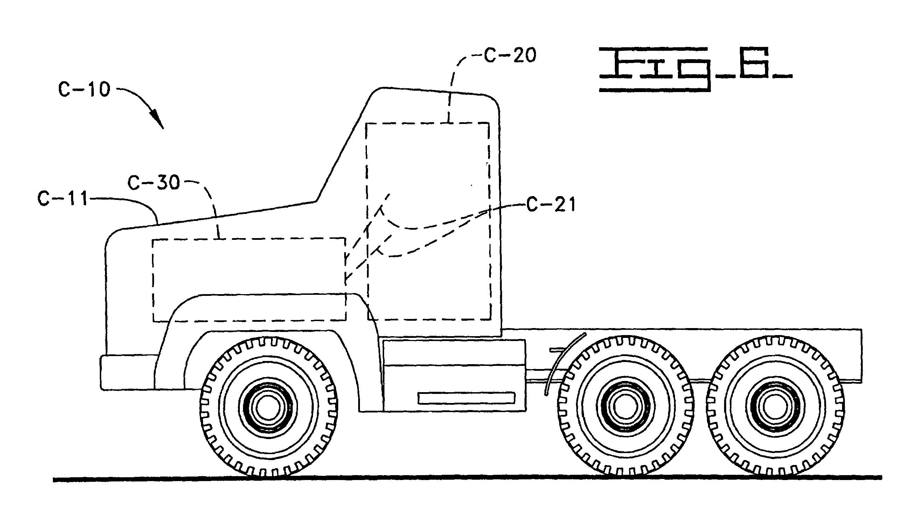

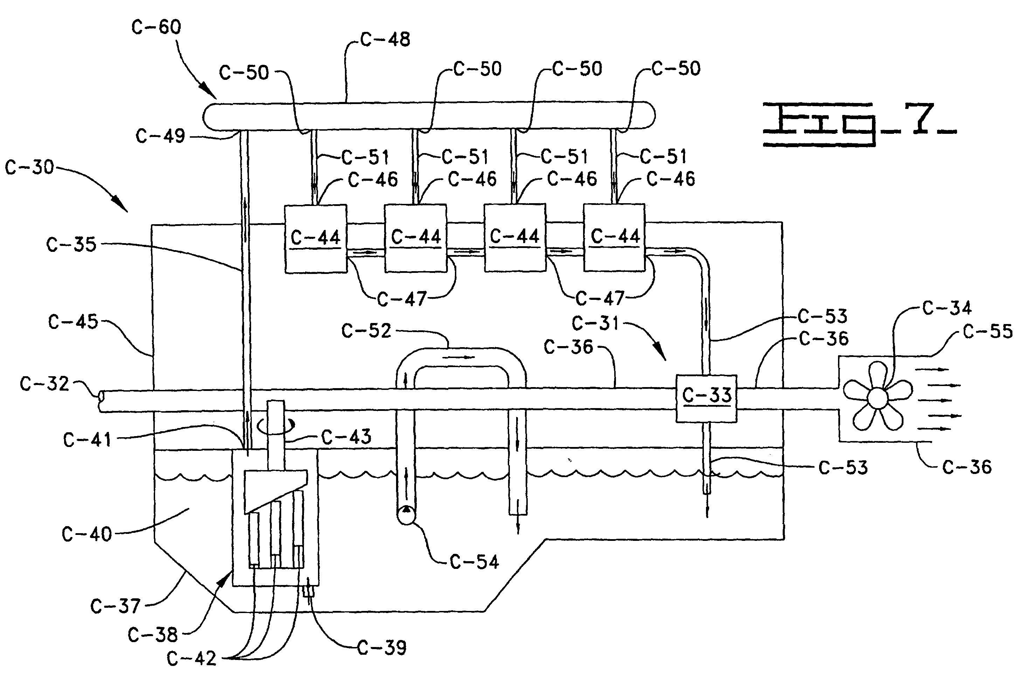

Referring now to Figures 6 and 7, there is shown a vehicle C-10, in this case a truck, according to still another embodiment of the present invention. Vehicle C-10 includes a passenger compartment C-20, defined by a vehicle housing C-11, and an engine C-30. An operator in passenger compartment C-20 can control engine C-30 by manipulating a set of controls C-21 located in passenger compartment C-20.

Referring now to Figure 7, engine C-30 includes an engine casing C-45. An oil pan C-37 filled with an amount of lubricating oil C-40 is contained within engine C-30 and defined in part by engine casing C-45. A conventional lubricating system C-52 is contained within engine C-30, including a low pressure pump C-54. Operating in parallel to lubricating system C-52 is a hydraulic system C-60 which preferably utilizes lubricating oil C-40 as a hydraulic fluid in actuating a plurality of hydraulic devices C-44. Hydraulic system C-60 also includes a high pressure pump C-38 which is positioned in oil pan C-37 and partially submerged in oil C-40. While any available engine fluid could be used by hydraulic system C-60 as actuation fluid, the present invention utilizes oil C-40. This allows hydraulic system C-60 to be directly connected to lubricating system C-52. High pressure pump C-38 includes a plurality of pistons C-42 which reciprocate as pump shaft C-43 rotates. A pump inlet C-39 is positioned on high pressure pump C-38 to be near the bottom of oil pan C-37 in order to always be exposed to a ready supply of oil C-40. Pressurized oil exits high pressure pump C-38 through an outlet C-41 and flows through a high pressure supply passageway C-35 to an inlet C-49 of a high pressure manifold C-48.

High pressure manifold C-48 includes a plurality of outlets C-50, each of which is connected to a respective branch passage C-51. Each branch passage C-51 is connected to a device inlet C-46 of an individual hydraulic device C-44. For the purposes of the present invention, hydraulic devices C-44 can be devices attached to engine C-30 as shown, such as hydraulic fuel injectors, exhaust brakes or gas exchange valves. Alternatively, hydraulic devices C-44 can be devices separated from engine C-30, but attached to vehicle housing C-11, such as a hydraulic motor, a hydraulic mechanical device, or a hydraulic cylinder. In such an alternative, the hydraulic system could, but likely would not, share fluid with the engine's lubricating system. In the illustrated example embodiment, each hydraulic device C-44 includes a device outlet C-47 that empties into a return pipe C-53 which allows oil C-40 to return to oil pan C-37 for recirculation. Oil C-40 flowing through return pipe C-53 has been quickly heated as a result of both work done in hydraulic devices C-44 and the rising temperatures in engine C-30.

The heated oil C-40 flowing through return pipe C-53 passes through a heating system C-31 before returning to oil pan C-37 for recirculation. Heating system C-31 includes a heating system supply passageway C-36 which has a first end C-32 open to relatively cool air and a second end C-55 open to passenger compartment C-20. Preferably, a fan C-34 is positioned in heating system supply passageway C-36 and is used to force air into passenger compartment C-20. Before flowing into passenger compartment C-20, relatively cool air flowing through heating system supply passageway C-36 passes through a heat exchanger C-33. Heat exchanger C-33 can be attached to any suitable location on vehicle housing C-11 but is preferably located adjacent engine C-30. Heat exchanger C-33 transfers heat from oil C-40 to the relatively cool air. The now cooler oil C-40 flowing out of heat exchanger C-33 is returned to oil pan C-37 for recirculation via return pipe C-53. As previously stated, while hydraulic system C-60 has been shown as attached to engine C-30, it could be attached to vehicle housing C-11 but separated from engine C-30, such as in the case of a bulldozer attachment.

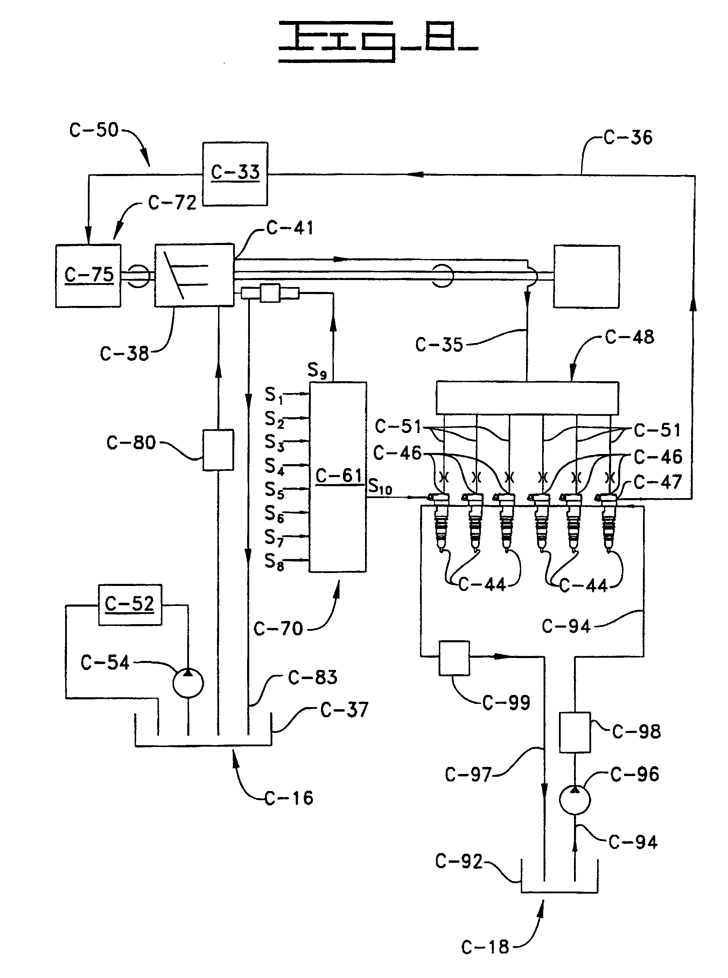

Referring now to Figure 8, there is shown hydraulic system C-60, here a hydraulically-actuated fuel injection system, as adapted for engine C-30. The fuel injection system C-60 includes at least one hydraulically actuated fuel injector C-44, all of which are adapted to be positioned in a respective cylinder head bore of engine C-30. The fuel injection system C-60 includes a source of actuation fluid C-16 for supplying actuation fluid to each fuel injector C-44 at a device inlet C-46, and a source of fuel C-18 for supplying fuel to each fuel injector C-44 at a fuel inlet C-22. The fuel injection system C-60 also includes a means for recirculating actuation fluid C-72, containing a hydraulic motor C-75, which is capable of recovering hydraulic energy from oil C-40 exiting fuel injectors C-44. A computer C-70 is also included in fuel injection system C-60 to control timing and duration of injection events.

The source of actuation fluid C-16 preferably includes oil pan C-37, one or more actuation fluid filters C-80, high pressure pump C-38 for generating high pressure in oil C-40, as discussed for Figure 7, and at least one high pressure manifold C-48. Pump outlet C-41 of high pressure pump C-38 is arranged in fluid communication with high pressure manifold C-48 via supply passageway C-35. Branch passages C-51 connect device inlet C-46 of each fuel injector C-44 to high pressure manifold C-48. After performing work in each fuel injector C-44, oil C-40 exits through device outlet C-47 into return pipe C-53. Oil C-40 is carried to heating system C-31 by return pipe C-53 which acts to fluidly connect fuel injectors C-44 to heat exchanger C-33. After passing heat exchanger C-33, a portion of the recirculated oil C-40 is channeled to high pressure pump C-38 and another portion is returned to oil pan C-37 via return pipe C-83.

The source of fuel C-18 preferably includes a fuel supply regulating valve C-99 and a fuel circulation and return passage C-97 arranged in fluid communication between the fuel injectors C-44 and the fuel tank C-92. Fuel is supplied to the fuel injectors C-44 via a fuel supply passage C-94 arranged in fluid communication between the fuel tank C-92 and the fuel inlet C-22 of each fuel injector C-44. Fuel being supplied through the fuel supply passage C-94 travels through a low pressure fuel transfer pump C-96 and one or more fuel filters C-98.

The system includes a computer C-70 that has an electronic control module C-61 which controls the timing and duration of injection events and pressure in high pressure manifold C-48. Based upon a variety of input parameters including temperature, throttle, engine load, etc. (S₁ - S₈) electronic control module C-61 can determine a desired injection timing and duration, and manifold pressure to produce some desired performance at the sensed operating conditions.

### Industrial Applicability

Referring now to the embodiment of the present invention shown in Figures 1-2, recall that the actuation fluid used by the present invention is engine lubricating oil. Actuation fluid pumped by low pressure pump A-36 is directed through engine lubricating circuit A-23. After this actuation fluid has performed work in engine lubricating circuit A-23 it flows back into oil pan A-34 where it will be recirculated. A portion of oil pumped by low pressure pump A-36 is channeled to high pressure pump A-42 rather than to engine lubricating circuit A-23.

Actuation fluid pumped by high pressure pump A-42 is directed to both power steering circuit A-24 and high pressure manifold A-46. A first amount of actuation fluid exits high pressure pump A-42 through outlet A-15 and flows into power steering circuit A-24 via flow passage A-27. This first amount of actuation fluid is returned to oil pan A-34 for recirculation by flow passage A-27 upon exiting power steering circuit A-24. A second amount of actuation fluid exits high pressure pump A-42 through outlet A-15 and flows to high pressure manifold A-46. The actuation fluid flows into fuel injectors A-11 via a series of rail branch passages A-50 from high pressure manifold A-46. After performing work in fuel injectors A-11, actuation fluid flows through recirculation passage A-37 to oil pan A-34 for recirculation. The present invention is also believed to improve the robustness of the complete engine by eliminating the need for one pump.

This embodiment of the present invention improves upon previous power steering systems by consolidating the high pressure hydraulic system pump with the power steering pump. By powering the power steering system with the high pressure hydraulic system pump, the need for multiple pumps is eliminated, thus reducing the amount of engine space needed for the systems.

Referring now to the embodiment of the present invention shown in Figures 4-6, recall that the actuation fluid used by this embodiment of the present invention is also engine lubricating oil. Actuation fluid pumped by low pressure pump B-36 is directed through engine lubricating circuit B-23. After this actuation fluid has performed work in engine lubricating circuit B-23 it flows back into oil pan B-34 where it will be recirculated in a conventional manner. Lubricating oil is also pumped from oil pan B-34 by high pressure pump B-42 to fan drive system B-24 and fuel injection system B-10.

Actuation fluid pumped by high pressure pump B-42 is directed to both fan drive system B-24 and high pressure manifold B-46. A first amount of actuation fluid exits high pressure pump B-42 through outlet B-15 and flows through flow regulating valve B-25 into fan drive system B-24, via flow passage B-28. Actuation fluid flowing through flow passage B-28 is channeled through hydraulic fan motor B-26 where it acts to power fan B-27. This first amount of actuation fluid is returned to oil pan B-34 for recirculation by flow passage B-28 upon exiting fan drive system B-24. A second amount of actuation fluid exits high pressure pump B-42 through outlet B-15 and flows to high pressure manifold B-46. The actuation fluid flows into fuel injectors B-11 via a series of rail branch passages B-50 from high pressure manifold B-46. After performing work in fuel injectors B-11, actuation fluid flows through recirculation passage B-37 to oil pan B-34 for recirculation.

This embodiment of the present invention is believed to improve the robustness of the complete engine by eliminating the need for one pump. The present invention also improves upon previous fan drive systems by consolidating the high pressure hydraulic system pump with the fan drive pump. By powering the fan drive system with the high pressure hydraulic system pump, the need for multiple pumps is eliminated, thus reducing the amount of engine space needed for these systems. In addition, inclusion of flow regulating valve B-25 allow the speed of fan B-27 to be somewhat independent of the speed of engine B-22 to avoid wasting energy.

Referring now to the embodiment of the present invention shown in Figures 6-8, oil C-40 is drawn into pump inlet C-39 and is pressurized by the action of reciprocating pistons C-42. Pressurized oil C-40 exits high pressure pump C-38 via pump outlet C-41 and flows through high pressure supply passageway C-35 into high pressure manifold C-48. This pressurized oil C-40 flows into hydraulic devices C-44 via a series of branch passages C-51, where the pressurized oil C-40 acts as a hydraulic fluid to actuate hydraulic devices C-44. As oil C-40 travels through hydraulic devices C-44 it is heated. Oil C-40, which is being used as actuation fluid in hydraulic devices C-44, is the same fluid as oil C-40 used to lubricate engine C-30, which also heats up as it circulates through the moving parts of engine C-30. The heated oil C-40 exits hydraulic devices C-44 through device outlets C-47 and empties into return pipe C-53.

Heated oil C-30 flowing through return pipe C-53 enters heat exchanger C-33 which transfers the heat from oil C-40 to the relatively cool air flowing through heating system supply passageway C-36. The now relatively heated air is moved into passenger compartment C-20 by fan C-34 which is located in heating system supply passageway C-36. Relatively cool oil C-40 then exits heat exchanger C-33 and flows through return pipe C-53 to oil pan C-37 for recirculation.

This embodiment of the present invention improves upon previous passenger compartment heating systems by utilizing the heated oil from the hydraulic devices to heat the air being projected into the passenger compartment. Because the temperature of the oil increases much faster than the temperature of engine coolant, the present invention can improve the performance of passenger compartment heating systems. Further, because the present system harnesses available heat from hydraulic system C-60 to heat the passenger compartment, the present invention might reduce or eliminate the need for an actuation fluid cooler. In fact, heat exchanger C-33 might take the place of previous actuation fluid coolers. In such a case, it might be necessary to vent heated air after the passenger compartment is up to temperature.

It should be understood that the above description is intended for illustrative purposes only, and is not intended to limit the scope of the present invention in any way. Further, while a pressure reduction valve has not been shown in the second embodiment of the present invention, it should be appreciated that such a device could be added when it is desirable to operate the fuel injection system at a different pressure than the power steering system.
Additionally, while the present systems utilize engine lubricating oil as actuation fluid to allow the hydraulic system and power steering system to be directly connected to the engine lubricating system, it should be appreciated that the actuation fluid could be supplied from a separate source and the engine lubricating system could be made separate. Further, while the heat exchanger in the third embodiment of the present invention is shown in Figure 7 as being positioned downstream from hydraulic devices, it should be appreciated that the heat exchanger could also be located upstream from the hydraulic devices with little or no change in effectiveness. Additionally, while the vehicle shown in Figure 6 is a truck, it should be appreciated that the present invention would also find application in marine vehicles. Thus, those skilled in the art will appreciate the various modifications could be made to the disclosed embodiments without departing from the intended scope of the present invention, which is defined in terms of the claims set forth below.

## Claims

1. A vehicle (A-60) comprising:
a vehicle housing (A-69) with a plurality of wheels (A-62) attached thereto;
a power steering system (A-24) attached to said vehicle housing (A-69) and being operably coupled to a number of said wheels (A-62), and including a fluid flow circuit (A-27);
an internal combustion engine (A-22) attached to said vehicle housing (A-69);
an engine lubricating system (A-23) attached to said internal combustion engine (A-22) and including a low pressure pump (A-36) ;
a hydraulically actuated fuel injection system (A-10) attached to said internal combustion engine (A-22) and including a high pressure pump (A-42); and
said fluid flow circuit (A-27) being in fluid communication with an outlet (A-15) from said high pressure pump (A-42).

2. The vehicle according to claim 1, said engine (B-22) further comprising:
an engine housing (B-12); said hydraulically actuated fuel injection system (B-10) being attached to said engine housing (B-12) and including a hydraulic fluid flowing through at least one passageway (B-28);
a fan drive system (B-24) attached to said engine housing (B-12) and including a hydraulic motor (B-26) and a fan (B-27) positioned to move air over said engine (B-22);
said hydraulic motor (B-26) has an inlet fluidly connected to said at least one passageway (B-28) ; and
a flow regulating valve (B-25) positioned in said at least one passageway (B-28) and having a position at which said hydraulic fluid flows simultaneously through said hydraulically actuated fuel injection system (B-10) and said fan drive system (B-24).

3. The vehicle (C-10) according to claim 1, wherein
said vehicle housing (C-11) defines a passenger compartment (C-20);
said hydraulically actuated fuel injection system (C-60) including a hydraulic fluid (C-40) flowing through at least one passageway (C-53), wherein said hydraulic fluid (C-40) is engine lubricating oil shared with an engine lubricating system (C-52);
said vehicle further comprising a passenger compartment heating system (C-31) attached to said vehicle housing (C-11);
said passenger compartment heating system (C-31) including a heat exchanger (C-33); and
a portion of said heat exchanger (C-33) being a segment of said at least one passageway (C-53).

## Patentansprüche

1. Ein Fahrzeug (A-60), welches Folgendes aufweist:
einen Fahrzeugrahmen bzw. ein Gehäuse (A-69) mit einer Vielzahl von daran angebrachten Rädern (A-62);
ein Servolenksystem (A-24), angebracht am Fahrzeugrahmen (A-69) und im Betrieb mit einer Anzahl der erwähnten Räder (A-62) gekuppelt und einen Strömungsmittelströmungskreis (A-27) aufweisend;
einen Verbrennungsmotor (A-22), befestigt am Fahrzeugrahmen (A-69);
ein Motorschmiersystem (A-23), angebracht an dem Verbrennungsmotor (A-22) und eine Niederdruckpumpe (A-36) aufweisend;
ein hydraulisch betätigtes Kraftstoffeinspritzsystem (A-10), angebracht an dem Verbrennungsmotor (A-22) und eine Hochdruckpumpe (A-42) aufweisend; und
wobei der Strömungsmittelströmungskreis (A-27) in Strömungsmittelverbindung mit einem Auslass (A-15) von der Hochdruckpumpe (A-42) steht.

2. Fahrzeug nach Anspruch 1, wobei der Motor (B-22) ferner Folgendes aufweist:
ein Motorgehäuse (B-12);
wobei das hydraulisch betätigte Kraftstoffeinspritzsystem (B-10) an dem Motorgehäuse (B-12) angebracht ist und ein hydraulisches Strömungsmittel aufweist, welches durch mindestens einen Durchlasspfad (B-28) fließt;
ein Ventilatorantriebssystem (B-24), angebracht an dem Motorgehäuse (B-12) und einen Hydraulikmotor (B-26) aufweisend, und wobei ein Ventilator (B-27) zur Bewegung von Luft über den Motor (B-22) angeordnet ist;
wobei der Hydraulikmotor (B-26) einen Einlass besitzt, der strömungsmittelmäßig mit dem mindestens einen Durchlasspfad (B-28) verbunden ist; und
ein Strömungsregulierventil (B-25), positioniert in dem mindestens einen Durchlasspfad (B-28) und mit einer Position, in der hydraulisches Strömungsmittel gleichzeitig durch das hydraulisch betätigte Kraftstoffeinspritzsystem (B-10) und das erwähnte Ventilatorantriebssystem (B-24) fließt.

3. Fahrzeug (C-10) nach Anspruch 1, wobei das Fahrzeuggehäuse (C-11)
ein Passagierabteil (C-20) definiert;
wobei das hydraulisch betätigte Kraftstoffeinspritzsystem (C-60) ein hydraulisches Strömungsmittel (C-40) aufweist, welches durch den mindestens einen Durchlasspfad (C-53) fließt,
wobei das hydraulische Strömungsmittel (C-40) Motorschmieröl ist, und zwar geteilt mit einem Motorschmiersystem (C-51);
wobei das Fahrzeug ferner Folgendes aufweist:
ein Passagierabteilheizsystem (C-31), angebracht an dem Fahrzeuggehäuse (C-11);
wobei das Passagierabteilheizsystem (C-31) einen Wärmeaustauscher (C-33) aufweist; und
wobei ein Teil des Wärmeaustauschers (C-33) ein Segment des erwähnten mindestens einen Durchlasspfads (C-53) ist.

## Revendications

1. Véhicule (A-60) comprenant :
une carrosserie de véhicule (A-69) à laquelle est fixée une pluralité de roues (A-62) ;
un système de direction assistée (A-24) lié à la carrosserie de véhicule (A-69), couplé, de manière à les actionner, à une partie des roues (A-62), et comportant un circuit de circulation de fluide (A-27) ;
un moteur à combustion interne (A-22) lié à la carrosserie de véhicule (A-69) ;
un système de lubrification de moteur (A-23) lié au moteur à combustion interne (A-22) et comprenant une pompe basse pression (A-36) ;
un système d'injection de carburant à actionnement hydraulique (A-10) lié au moteur à combustion interne (A-22) et comprenant une pompe haute pression (A-42) ; et
le circuit de circulation de fluide (A-27) étant en communication avec une sortie (A-15) de la pompe haute pression (A-42).

2. Véhicule selon la revendication 1, le moteur (B-22) comprenant en outre :
un carter de moteur (B-12) ;
le système d'injection de carburant à actionnement hydraulique (B-10) étant lié au carter de moteur (B-12) et comportant un fluide hydraulique circulant dans au moins un passage (B-28) ;
un système d'entraînement de ventilateur (B-24) fixé au carter de moteur (B-12) et comportant un moteur hydraulique (B-26) et un ventilateur (B-27) positionné de manière à déplacer l'air au-dessus du moteur (B-22) ;
le moteur hydraulique (B-26) comportent une entrée connectée audit au moins un passage (B-28) ; et
une vanne de régulation de flux (B-25) positionnée dans ledit au moins un passage (B-28) et ayant une position dans laquelle ledit fluide hydraulique circule simultanément dans le système d'injection de carburant à actionnement hydraulique (B-10) et le système d'entraînement de ventilateur (B-24).

3. Véhicule (C-10) selon la revendication 1, dans lequel :
la carrosserie de véhicule (C-11) définit une cabine de passager (C-20) ;
le système d'injection de carburant à actionnement hydraulique (C-60) comprend un fluide hydraulique (C-40) circulant dans au moins un passage (C-53), dans lequel le fluide hydraulique (C-40) est de l'huile de moteur lubrifiante partagée avec un système de lubrification de moteur (C-52) ;
le véhicule comprend en outre un système de chauffage de cabine de passager (C-31) lié à la carrosserie de véhicule (C-11) ;
le système de chauffage de cabine de passager (C-31) comportant un échangeur de chaleur (C-33) ; et
une partie de l'échangeur de chaleur (C-33) étant un segment dudit au moins un passage (C-53).
